# EUROPEAN PATENT APPLICATION

(11) **EP 4 603 389 A2**
(43) Date of publication of application: **20.08.2025**
(21) Application number: 25157826.6
(22) Date of filing: 13.02.2025
(51) Int. Cl.: B64D 13/06, B64D 15/16

(54) **PNEUMATIC DEICING SYSTEM INTEGRATED WITH AN AIR MANAGEMENT SYSTEM AND ADVANCED INLET AIR CONNECTION VALVE**

(30) Priority: 16.02.2024 US 202418444032
(71) Applicant: Goodrich Corporation, Charlotte, NC 28217-4578 (US)
(72) Inventor: FAHRNER, Alan J., Canton, 44708 (US); BOTURA, Galdemir, Copley, 44321 (US)
(74) Representative: Dehns

(57) **Abstract**

A pneumatic de-icing system (200) is provided. In some embodiments, the pneumatic de-icing system includes a de-icer flow valve (220), an accumulator (204), and a source control valve (212). The source control valve is configured to supply pressurized air to the at least one de-icer flow valve from either the accumulator or a pressurized cabin depending on a differential air pressure between an air pressure in the pressurized cabin and an ambient air pressure surrounding an aircraft. In different embodiments, pneumatic de-icing system includes a de-icing assembly, a pneumatic inlet valve, a de-icer flow valve, and an ejector. The de-icer flow valve is configured to supply pressurized air to the pneumatic inlet valve during an icing event. The ejector is configured to supply a vacuum to the pneumatic inlet valve.

## Description

### FIELD

The present disclosure generally relates to an ice protection system and more specifically to a pneumatic de-icer with integrated inlet valve and a deicing system connected with Air Management System / Environmental Control System as pressurization source for energy optimization and independency of the bleed air source from the engine.

### BACKGROUND

Ice protection systems (IPS) allow aircraft pilots to exit icing conditions and avoid accidents due to rapid ice accumulation on leading surfaces of an aircraft. Various modes of IPS include pneumatic, electro-thermal, and electro-mechanical expulsion systems. Pneumatic de-icing systems use engine bleed air to inflate elastomeric de-icers, generating shear stress to break and shed ice formed on leading edges. Electro-thermal de-icing systems convert electrical energy to heat the leading-edge surfaces and shed ice by melting the ice at the ice-leading edge interface. Electro-mechanical de-icing systems use electrical energy to actuate various elements/mechanisms on the leading-edge surface to impart shear stress to ice formation and shed the ice.

### SUMMARY

A pneumatic de-icing system is disclosed herein. The pneumatic de-icing system includes a de-icer flow valve, an accumulator, and a source control valve. The source control valve is fluidly coupled to the at least one de-icer flow valve. The source control valve is configured to supply pressurized air to the at least one de-icer flow valve from either the accumulator or a pressurized cabin depending on a differential air pressure between an air pressure in the pressurized cabin and an ambient air pressure surrounding the aircraft.

In various embodiments, responsive the differential air pressure between the air pressure in the pressurized cabin and the ambient air pressure surrounding the aircraft being less than 6895 newtons/square meter (1 pound per square inch (PSI)), the source control valve is configured to supply the pressurized air to the at least one de-icer flow valve from the accumulator.

In various embodiments, responsive to the differential air pressure between the air pressure in the pressurized cabin and the ambient air pressure surrounding the aircraft being between 2.758e+04 newtons/square meter (4 pounds per square inch (PSI)) and 6.895e+04 newtons/square meter (10 PSI), the source control valve is configured to supply the pressurized air to the at least one de-icer flow valve from the pressurized cabin.

In various embodiments, the pneumatic de-icing system further includes at least one de-icing assembly. In various embodiments, the at least one de-icer flow valve is fluidly coupled to the at least one de-icing assembly. In various embodiments, the at least one de-icer flow valve is configured to, responsive to an icing event, supply the pressurized air to the at least one de-icing assembly to inflate the at least one de-icing assembly.

In various embodiments, the pneumatic de-icing system further includes an ejector. In various embodiments, the ejector is fluidly coupled to the at least one de-icer flow valve. In various embodiments, the at least one de-icer flow valve is configured to, responsive to an absences of the icing event, supply a vacuum to the at least one de-icing assembly via the ejector to deflate the at least one de-icing assembly.

In various embodiments, the at least one de-icing assembly is a pneumatic de-icing assembly on at least one of a wing, a vertical stabilizer, a horizontal stabilizer, or other external surface of the aircraft on which supercooled droplets may impinge.

In various embodiments, the pneumatic de-icing system further includes a pressurizing source. In various embodiments, the pressurizing source is fluidly coupled to the accumulator and the pressurized cabin. In various embodiments, the pressurizing source is configured to supply the pressurized air to both the accumulator and the pressurized cabin.

In various embodiments, the pneumatic de-icing system further includes an ejector. In various embodiments, the ejector is fluidly coupled to the pressurizing source. In various embodiments, the ejector is configured to utilize a portion of the pressurized air from the pressurizing source to generate a vacuum.

Also disclosed herein is an aircraft. The aircraft includes a pressurized cabin and a pneumatic de-icing system. The pneumatic de-icing system includes a de-icer flow valve, an accumulator, and a source control valve. The source control valve is fluidly coupled to the at least one de-icer flow valve. The source control valve is configured to supply pressurized air to the at least one de-icer flow valve from either the accumulator or the pressurized cabin depending on a differential air pressure between an air pressure in the pressurized cabin and an ambient air pressure surrounding the aircraft.

In various embodiments, responsive the differential air pressure between the air pressure in the pressurized cabin and the ambient air pressure surrounding the aircraft being less than 6895 newtons/square meter (1 pound per square inch (PSI)), the source control valve is configured to supply the pressurized air to the at least one de-icer flow valve from the accumulator.

In various embodiments, responsive to the differential air pressure between the air pressure in the pressurized cabin and the ambient air pressure surrounding the aircraft being between 2.758e+04 newtons/square meter (4 pounds per square inch (PSI)) and 6.895e+04 newtons/square meter (10 PSI), the source control valve is configured to supply the pressurized air to the at least one de-icer flow valve from the pressurized cabin.

In various embodiments, the pneumatic de-icing system further includes at least one de-icing assembly. In various embodiments, the at least one de-icer flow valve is fluidly coupled to the at least one de-icing assembly. In various embodiments, the at least one de-icer flow valve is configured to, responsive to an icing event, supply the pressurized air to the at least one de-icing assembly to inflate the at least one de-icing assembly.

In various embodiments, the pneumatic de-icing system further includes an ejector. In various embodiments, the ejector is fluidly coupled to the at least one de-icer flow valve. In various embodiments, the at least one de-icer flow valve is configured to, responsive to an absences of the icing event, supply a vacuum to the at least one de-icing assembly via the ejector to deflate the at least one de-icing assembly.

In various embodiments, the at least one de-icing assembly is a pneumatic de-icing assembly on at least one of a wing, a vertical stabilizer, a horizontal stabilizer, or other external surface of the aircraft on which supercooled droplets may impinge.

In various embodiments, the pneumatic de-icing system further includes a pressurizing source. In various embodiments, the pressurizing source is fluidly coupled to the accumulator and the pressurized cabin. In various embodiments, the pressurizing source is configured to supply the pressurized air to both the accumulator and the pressurized cabin.

In various embodiments, the pneumatic de-icing system further includes an ejector. In various embodiments, the ejector is fluidly coupled to the pressurizing source. In various embodiments, the ejector is configured to utilize a portion of the pressurized air from the pressurizing source to generate a vacuum.

Also disclosed herein is a pneumatic de-icing system. The pneumatic de-icing system includes a de-icing assembly, a pneumatic inlet valve, a de-icer flow valve, and an ejector. The pneumatic inlet valve is fluidly coupled to the de-icing assembly. The de-icer flow valve is fluidly coupled to a first port of the pneumatic inlet valve. The de-icer flow valve is configured to supply pressurized air to the pneumatic inlet valve during an icing event. The ejector is fluidly coupled to a second port of the pneumatic inlet valve. The ejector is configured to supply a vacuum to the pneumatic inlet valve.

In various embodiments, responsive to the icing event, the pressurized air from the de-icer flow valve translates a poppet style check valve in the pneumatic inlet valve to an open state blocking the second port and allowing the pressurized air to inflate the de-icing assembly.

In various embodiments, responsive to an absences of the icing event and an absence of the pressurized air being supplied from the de-icer flow valve, a poppet style check valve in the pneumatic inlet valve translates to a closed state blocking the first port and allowing the vacuum from the ejector to deflate the de-icing assembly.

In various embodiments, a spring in the poppet style check valve closes the pneumatic inlet valve blocking the first port in response to the absence of the pressurized air being supplied from the de-icer flow valve.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft including a de-icing assembly on the wings, in accordance with various embodiments.
FIG. 2 illustrates a pneumatic de-icing system that utilizes pressurized air from either an accumulator (pressure tank) or a pressurized cabin of the aircraft, in accordance with various embodiments.
FIG. 3 illustrates a pneumatic de-icing system that provides a pneumatic inlet valve for inflating pneumatic de-icers and a vacuum supply to maintain the pneumatic de-icers in the deflated state, in accordance with various embodiments.
FIGS. 4A and 4B illustrate a pneumatic inlet valve, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

An aircraft must be pushed through the air to generate lift. Aircraft wings may generate most of the lift associated with holding the aircraft in the air. Accordingly, aircraft wings may be shaped as an airfoil. An airfoil may be a cross-sectional shape of an object whose motion through a fluid is capable of generating lift. The air may resist aircraft motion in the form of aerodynamic drag. Turbine engines or reciprocating engines/turboprops with propellers may provide thrust to overcome drag and push the aircraft forward. A wing's aerodynamic efficiency may be expressed as a lift-to-drag ratio. A high lift-to-drag ratio may be associated with a smaller thrust to propel the wings through the air at sufficient lift, and vice versa.

Ice formation on a leading edge of a wing, as well as other aircraft structures, such as vertical stabilizers, horizontal stabilizers, or other external surface of the aircraft on which supercooled droplets may impinge, may disrupt or destroy the smooth flow of air along the aircraft structures, increasing drag while decreasing the ability of the wing to create lift. Accordingly, ice formation on the leading edge of an aircraft structures may prevent an aircraft from taking off, or worse, may interfere with flight.

Pneumatic de-icers have typically been supplied with a vacuum to maintain the pneumatic de-icers in the deflated state during all stages of flight except when the de-icing system is turned on and actively inflating the de-icers. Responsive to the de-icing system being turned on, pressurized air at specific time intervals is supplied to the de-icers, and vacuum reapplied between pressurizations while flying in atmospheric icing conditions. The vacuum and air are supplied by an engine driven vacuum pump for aircraft using reciprocating engines. For both turbo prop and jet aircraft, the pressurized air is supplied by bleed air from the compressor section of the turbine engine. Vacuum may come from several sources including a separate vacuum pump, inlet to a compressor system, ejector driven by the compressed air (pressurized air driven venturi vacuum generator), or ejector flow control valves, which have a venturi built into the inflation valve. With a move to designs of new aircraft being electrically reliant, the availability of bleed air from turbine engine compressors may be limited or non-existent. Accordingly, an alternative low-power pressurized air supply is needed to inflate pneumatic de-icers to remove ice from the aircraft at specific times while flying in atmospheric icing conditions. Additionally, a vacuum supply is needed to maintain pneumatic de-icers in the deflated state.

Disclosed herein is a pneumatic de-icing system that utilizes pressurized air from an electrically driven environmental control system (ECS) compressor or other similar compressor that supplies air to both an accumulator (pressure tank) and a pressurized cabin of the aircraft. In various embodiments, at low altitude, responsive to cabin air pressure being near external ambient air pressure, under commands of a controller, air from the ECS compressor may be routed to the accumulator (pressure tank) and the air from the accumulator may be utilized in inflating the pneumatic de-icing system. In various embodiments, the accumulator may be sized to even out a demand on the ECS compressor. In that regard, in various embodiments, the accumulator is basically a bottle to collect and hold pressurized fluid, in this case air. When the de-icer is inflated, part of the volume of air is distributed from the accumulator, and part of the volume is distributed from an air source, i.e. the compressor. The sizing of the accumulator is based on a calculation of how much air volume is required to inflate the de-icer, how much air is available from the air source, and the difference volume of air required from the accumulator, thus the size of the accumulator. In various embodiments, at higher altitudes responsive to little to no excess pressurized air being available from the ECS compressor, i.e. there is a differential air pressure between inside and outside of the pressurized cabin, under commands from the controller, air from the pressurized cabin, which acts as a large accumulator, may be utilized in inflating the pneumatic de-icing system. In that regard, in various embodiments, exhaust air from the cabin may be utilized in inflating the pneumatic de-icing system. Accordingly, in various embodiments, the pneumatic de-icing system utilizes a set of valves that allows air to be pulled from the accumulator or the cabin depending on the available air pressure difference between the external ambient and the cabin or the accumulator. In various embodiments, a source control valve would be used to control, under commands from the controller, which source would be used thereby addressing the inflation of pneumatic de-icers to remove ice from the aircraft at specific times while flying in atmospheric icing conditions.

In order to inflate pneumatic de-icers and provide vacuum supply to maintain pneumatic de-icers in the deflated state when not inflated, in various embodiments, a pneumatic inlet valve is provided that includes a pressurized air port and a vacuum port. In various embodiments, pressurized air is supplied through a flow control valve. In various embodiments, a continuous vacuum is provided from one of various sources including a separate vacuum pump, inlet to a compressor system, ejector driven by the compressed air (pressurized air driven venturi vacuum generator), or ejector flow control valves (EFCV), which all EFCVs have a venturi built into the pneumatic control valve. In various embodiments, the pneumatic inlet valve includes a first connection for pressurized air and a second connection for low pressurized air (vacuum). In various embodiments, the two connections are joined within the pneumatic inlet valve into a single connection before being introduced into the pneumatic de-icer. In various embodiments, in an area of the pneumatic inlet valve where the two unique connections are joined together, the pneumatic inlet valve includes a poppet style check valve that controls the flow of either the pressurized air to the de-icer or a vacuum flow to the de-icer responsive to an absence of pressurized air being supplied. In various embodiments, the check valve is biased in the closed position, blocking the tubing between the de-icer and the pressurized air port. In various embodiments, responsive to pressurized air being supplied, via commands from a controller, to the de-icer through the pressurized air port of the pneumatic inlet valve, the check valve is pushed open allowing the pressurized air to pass. In various embodiments, responsive to the pressurized air being stopped, the check valve moves back to the closed position, allowing vacuum to be reapplied to the de-icer.

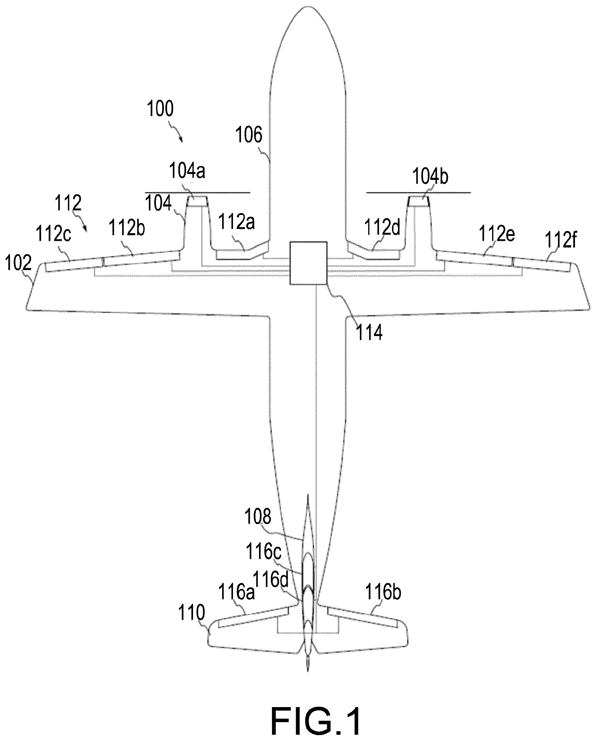

Referring now to FIG. 1, a top view of an aircraft 100 is illustrated, in accordance with various embodiments. Aircraft 100 includes wings 102, engines 104, a fuselage 106, a vertical stabilizer 108, and horizontal stabilizers 110, among other control surfaces. Aircraft 100 further includes a plurality of de-icing assemblies 112 including de-icing assemblies 112a, 112b, 112c on a first wing 102, de-icing assemblies 112d, 112e, 112f on a second wing 102, de-icing assemblies 104a and 104b on engines 104, de-icing assemblies 116c and 116d on vertical stabilizer 108, and de-icing assemblies 116a and 116b on horizontal stabilizers 110. In various embodiments, de-icing assemblies 112a-f may be located on a leading edge of each wing 102 (as illustrated in FIG. 1), de-icing assemblies 104a and 104b may be located on engine inlets of each engine 104, de-icing assemblies 116c and 116d may be located on a leading edge of vertical stabilizer 108, de-icing assemblies 116a and 116b may be located on a leading edge of horizontal stabilizers 110 to prevent the buildup of ice on the leading edges. In various embodiments, de-icing assemblies 112a, 112d may be located at a proximal end of wings 102 adjacent the fuselage 106, de-icing assemblies 112c, 112f may be located at a distal end of wings 102, and de-icing assemblies 112b, 112e may be located between de-icing assemblies 112a, 112d and de-icing assemblies 112c, 112f, respectively.

In various embodiments, de-icing assemblies 112 may be located on an external surface of wings 102, de-icing assemblies 104a and 104b may be located on an external surface of engine inlets of each engine 104, de-icing assemblies 116c and 116d may be located on an external surface of vertical stabilizer 108, de-icing assemblies 116a and 116b may be located on an external surface of horizontal stabilizers 110. For simplicity and ease of discussion, de-icing assemblies 112 will be described as being coupled to the leading edge of wings 102, though other locations are considered.

In various embodiments, each of the de-icing assemblies 112a-112f may be individually coupled to a controller 114. In various embodiments, controller 114 may comprise one or more processors configured to implement various logical operations in response to execution of instructions, for example, instructions stored on a non-transitory, tangible, computer-readable medium. The one or more processors can be a general-purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. In various embodiments, controller 114 may further comprise memory to store data, executable instructions, system program instructions, and/or controller instructions to implement the control logic of controller 114.

System program instructions and/or controller instructions may be loaded onto a non-transitory, tangible computer-readable medium having instructions stored thereon that, in response to execution by the controller 114, cause the controller 114 to perform various operations. The term "non-transitory" is to be understood to remove only propagating transitory signals per se from the claim scope and does not relinquish rights to all standard computer-readable media that are not only propagating transitory signals per se.

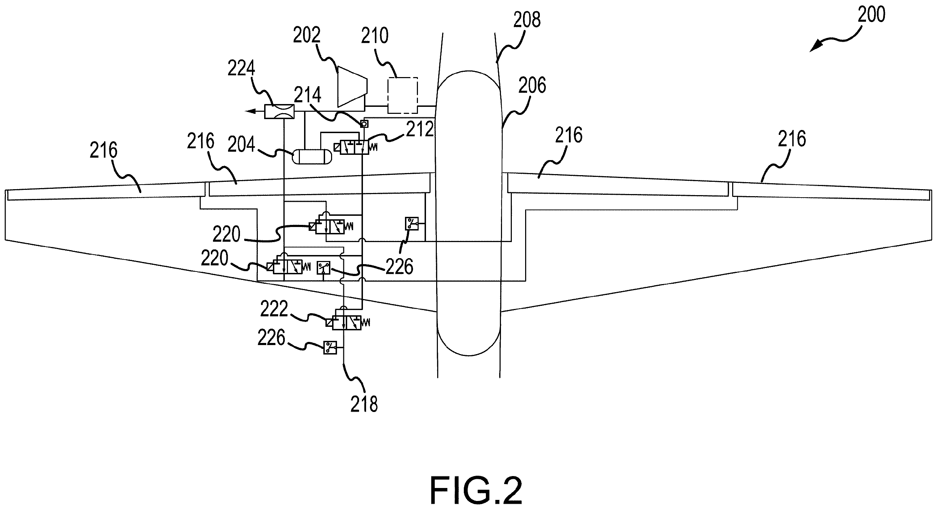

Referring to FIG. 2, in accordance with various embodiments, a pneumatic de-icing system that utilizes pressurized air from either an accumulator (pressure tank) or a pressurized cabin of the aircraft, is illustrated. In various embodiments, the pneumatic de-icing system 200 includes environmental control system (ECS) compressor 202 that supplies air to both an accumulator 204, i.e. a pressure tank, and a cabin 206 of an aircraft 208. In that regard, in various embodiments, ECS compressor 202 may be fluidly coupled to accumulator 204. Also in that regard, in various embodiments, ECS compressor 202 may further be fluidly coupled to cabin 206 via ECS control hardware 210. In various embodiments, ECS control hardware 210 controls the air pressure of the cabin 206. In various embodiments, accumulator 204 and cabin 206 may be fluidly coupled to a source control valve 212, which is under control of a controller, such as controller 114 of FIG. 1. In various embodiments, a check valve 214 may be fluidly coupled and positioned between the cabin 206 and the source control valve 212. In various embodiment check valve 214 prevents a backflow of pressurized air from the source control valve 212 to the cabin 206. In various embodiments, the source control valve 212, under control of the controller, controls whether pressurized air from the accumulator 204 or from the cabin 206 is utilized to inflate de-icing assemblies 216, 218 during an icing event. In that regard, in various embodiments, the source control valve 212 is fluidly coupled to de-icing assemblies 216, 218 only when de-icer flow valve 220 is positioned by the controller to be open. In various embodiments, the de-icing assemblies 216 are de-icing assemblies positioned on wings of the aircraft whereas the de-icing assemblies 218 are de-icing assemblies positioned on a vertical stabilizer and/or horizontal stabilizers.

In that regard, in various embodiments, at low altitude, responsive to air pressure in pressurized cabin 206 being at or near external ambient air pressure, i.e. less than 6895 newtons/square meter (1 pound per square inch (PSI)) difference between the air pressure in cabin 206 and the external ambient air pressure, under commands of a controller, the source control valve 212 is switched so that air from the accumulator 204 may be utilized in inflating the de-icing assemblies 216, 218. In various embodiments, at higher altitudes responsive to little to no excess pressurized air available from the ECS compressor 202, i.e. there is a differential air pressure between inside and outside of the cabin 206, under commands from the controller, the source control valve 212 is switched so that air from cabin 206, which acts as a large accumulator may be utilized in inflating the de-icing assemblies 216, 218. In various embodiments, the differential air pressure may be between 2.758e+04 newtons/square meter (4 PSI) and 6.895e+04 newtons/square meter (10 PSI). In various embodiments, the differential air pressure may be between 3.447e+04 newtons/square meter (5 PSI ) and 6.205e+04 newtons/square meter (9 PSI). In various embodiments, the differential air pressure may be 4.826e+04 newtons/square meter (7 PSI ). In that regard, in various embodiments, exhaust air from the cabin 206 may be utilized in inflating the de-icing assemblies 216, 218.

In various embodiments, while the source control valve 212, under control of the controller, controls whether pressurized air from the accumulator 204 or pressurized air from the cabin 206 is utilized in inflating the de-icing assemblies 216, 218, de-icer flow valves 220, 222, under control of the controller, control whether a pressurized air is being supplied to the de-icing assemblies 216, 218 or a vacuum is being supplied to the de-icing assemblies 216, 218. In that regard, in various embodiments, responsive to detecting an icing event, the de-icer flow valves 220, 222 are commanded by the controller to supply pressurized air to the de-icing assemblies 216, 218 thereby inflating the de-icing assemblies 216, 218. In various embodiments, responsive to not detecting an icing event or an icing event ending, the de-icer flow valves 220, 222 is commanded by the controller to switch to a vacuum to the de-icing assemblies 216, 218 thereby deflating the de-icing assemblies 216, 218. Accordingly, in various embodiments, each of the de-icer flow valves 220, 222 is fluidly coupled to the source control valve 212. Further, in various embodiments, the de-icer flow valves 220 are fluidly coupled to the de-icing assemblies 216 and the de-icer flow valve 222 is fluidly coupled to the de-icing assemblies 218. Moreover, each of the de-icer flow valves 220, 222 is fluidly coupled to ejector 224. In various embodiments, the ejector 224 is fluidly coupled to the ECS compressor 202. In various embodiments, the ejector 224 is configured to utilize a portion of the pressurized air from the ECS compressor 202 to generate a vacuum, i.e. a venturi pressurized air driven vacuum. In that regard, responsive to not detecting the icing event or the icing event ending, the ejector 224 generates a vacuum that deflates the de-icing assemblies 216, 218 via the de-icer flow valves 220, 222. In various embodiments, air pressure switches 226 provide a positive indication to the pilot/copilot that the pneumatic de-icing system 200 has adequate air pressure during the inflation portion of the de-icing cycle, and that pressure has been removed at all other times on the de-icing assemblies 216, 218. It is noted that while some of the components of the pneumatic de-icing system 200 are depicted outside the aircraft 208, the depiction is only for schematic illustration and all the components are positioned within the aircraft 208.

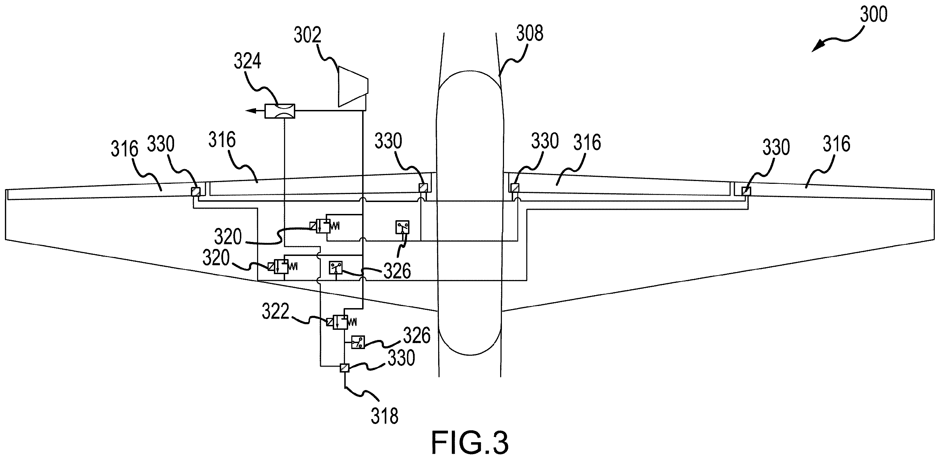

Referring to FIG. 3, in accordance with various embodiments, a pneumatic de-icing system that provides a pneumatic inlet valve for inflating pneumatic de-icers and a vacuum supply to maintain the pneumatic de-icers in the deflated state, is illustrated. In various embodiments, the vacuum may be a low power vacuum supply as described in U.S. Patent Publication No. 2003/0122037 A1. In various embodiments, the pneumatic de-icing system 300 includes pressurizing source 302, such as an environmental control system (ECS) compressor or engine bleed, among others, that supplies air to de-icing assemblies 316, 318 during an icing event. In various embodiments, the de-icing assemblies 316 are de-icing assemblies positioned on wings of the aircraft whereas the de-icing assemblies 318 are de-icing assemblies positioned on a vertical stabilizer or horizontal stabilizers. In that regard, pressurizing source 302 is fluidly coupled to each of the de-icer flow valves 320, 322 and the de-icer flow valves 320, 322 are fluidly coupled to respective one of the de-icing assemblies 316, 318. In various embodiments, de-icer flow valves 320, 322, under control of the controller, control pressurized air is being supplied to the de-icing assemblies 316, 318. In that regard, responsive to detecting an icing event, de-icer flow valves 320, 322, commanded by the controller, supply pressurized air to the de-icing assemblies 316, 318 thereby inflating the de-icing assemblies 316, 318. In various embodiments, air pressure switches 326 provide a positive indication to the pilot/copilot that the pneumatic de-icing system 300 has adequate air pressure during the inflation portion of the de-icing cycle, and that pressure has been removed at all other times on the de-icing assemblies 316, 318.

In various embodiments, responsive to not detecting an icing event or an icing event ending, the de-icer flow valves 320, 322 would be commanded by the controller to discontinue providing the pressurized air to the de-icing assemblies 316, 318 thereby allowing the de-icing assemblies 316, 318 to deflate. In that regard, each of the de-icing assemblies 316, 318 is fluidly coupled to ejector 324. In various embodiments, the ejector 324 is fluidly coupled to the pressurizing source 302. In various embodiments, the ejector 324 is configured to utilize a portion of the pressurized air from the ECS compressor to generate a vacuum, i.e. a venturi pressurized air driven vacuum. In that regard, responsive to not detecting an icing event or an icing event ending, the ejector 324 generates, via a command by the controller, a vacuum that deflates the de-icing assemblies 316, 318. In various embodiments, air pressure switches 326 provide a positive indication to the pilot/copilot that the pneumatic de-icing system 300 has adequate air pressure during the inflation portion of the de-icing cycle, and that pressure has been removed at all other times on the de-icing assemblies 316, 318. It is noted that while some of the components of the pneumatic de-icing system 300 are depicted outside of the aircraft 308, the depiction is only for schematic illustration and all of the components are positioned within the aircraft 308.

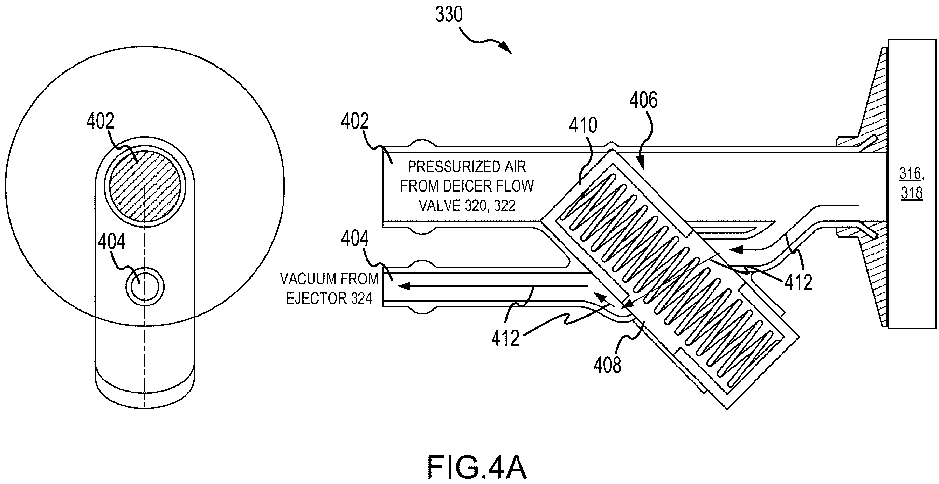

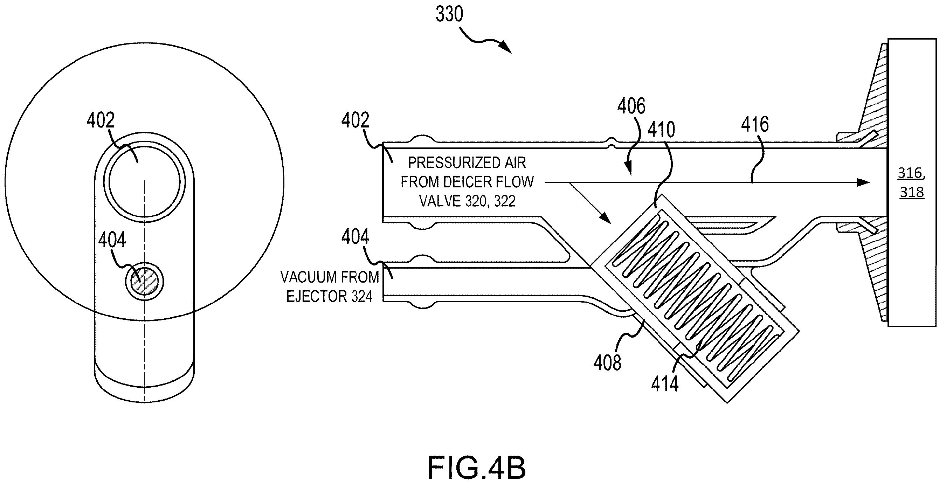

In various embodiments, located between the de-icer flow valves 320, 322 that provide pressurized air to inflate the de-icing assemblies 316, 318 and between the ejector 324 that provides a vacuum that deflates the de-icing assemblies 316, 318 is a pneumatic inlet valve 330 that includes a pressurized air port and a vacuum port. With further reference to FIGS. 4A and 4B, in accordance with various embodiments, a pneumatic inlet valve such as pneumatic inlet valve 330 of FIG. 3, is illustrated. In various embodiments, the pneumatic inlet valve 330 includes a first port 402 for pressurized air and a second port 404 for low pressurized air (vacuum). In various embodiments, the two connections are joined within the pneumatic inlet valve into a single connection 406 before being introduced into the de-icing assemblies 316, 318. In various embodiments, in an area of the pneumatic inlet valve 330 where the two unique connections are joined together, the pneumatic inlet valve 330 includes a poppet style check valve 408 that controls the flow of either the pressurized air to the de-icer or a vacuum flow to the de-icing assemblies 316, 318 responsive to an absence of pressurized air being supplied. In various embodiments, as illustrated in FIG. 4A, the poppet style check valve 408 is biased in the closed position, blocking the tubing between the de-icing assemblies 316, 318 and pressurized air from the de-icer flow valves 320, 322 via blocking mechanism 410 of the poppet style check valve 408 as well as blocking the pressurized air from the de-icer flow valves 320, 322 from the vacuum source, i.e. ejector 324. In the closed position, the pneumatic inlet valve 330 is configured to allow the vacuum from the ejector 324 to deflate the de-icing assemblies 316, 318, as shown by arrows 412. In various embodiments, as illustrated in FIG. 4B, responsive to pressurized air being supplied via the de-icer flow valves 320, 322, the poppet style check valve 408 is configured to be pushed open, compressing a spring 414 allowing the pressurized air from the de-icer flow valves 320, 322 to pass to inflate the de-icing assemblies 316, 318, as shown by arrows 416, while blocking mechanism 410 blocks the tubing between the de-icing assemblies 316, 318 and the vacuum from the ejector 324. In that regard, in various embodiments, the pressurized air from the de-icer flow valves 320, 322 causes the blocking mechanism 410 to translate downward blocking the tubing between the de-icing assemblies 316, 318 and the vacuum from the ejector 324. In various embodiments, responsive to the pressurized air from the de-icer flow valves 320, 322 stopping, the spring 414 expands causing the blocking mechanism 410 of the poppet style check valve 408 to block the tubing between the de-icing assemblies 316, 318 and line for the pressurized air from the de-icer flow valves 320, 322 thereby allowing vacuum to be reapplied to the de-icing assemblies 316, 318.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A pneumatic de-icing system, the pneumatic de-icing system comprising:
a de-icer flow valve (220);
an accumulator (204); and
a source control valve (212), wherein the source control valve is fluidly coupled to the de-icer flow valve and wherein the source control valve is configured to supply pressurized air to the de-icer flow valve from either the accumulator or a pressurized cabin (206) depending on a differential air pressure between an air pressure in the pressurized cabin and an ambient air pressure surrounding an aircraft.

2. The pneumatic de-icing system of claim 1, wherein, responsive the differential air pressure between the air pressure in the pressurized cabin (206) and the ambient air pressure surrounding the aircraft being less than 6895 newtons/square meter, the source control valve (212) is configured to supply the pressurized air to the de-icer flow valve (220) from the accumulator (204).

3. The pneumatic de-icing system of claim 1 or 2, wherein, responsive to the differential air pressure between the air pressure in the pressurized cabin (206) and the ambient air pressure surrounding the aircraft being between 2.758e+04 newtons/square meter and 6.895e+04 newtons/square meter, the source control valve (212) is configured to supply the pressurized air to the de-icer flow valve (220) from the pressurized cabin.

4. The pneumatic de-icing system of claim 1, 2 or 3, further comprising:
at least one de-icing assembly (216, 218), wherein the de-icer flow valve (220) is fluidly coupled to the at least one de-icing assembly and wherein the de-icer flow valve is configured to, responsive to an icing event, supply the pressurized air to the at least one de-icing assembly to inflate the at least one de-icing assembly.

5. The pneumatic de-icing system of claim 4, further comprising:
an ejector (224), wherein the ejector is fluidly coupled to the de-icer flow valve (220) and wherein the de-icer flow valve is configured to, responsive to an absences of the icing event, supply a vacuum to the at least one de-icing assembly via the ejector to deflate the at least one de-icing assembly (216, 218).

6. The pneumatic de-icing system of claim 4 or 5, wherein the at least one de-icing assembly (216, 218) is a pneumatic de-icing assembly on at least one of a wing, a vertical stabilizer, a horizontal stabilizer, or other external surface of the aircraft on which supercooled droplets may impinge.

7. The pneumatic de-icing system of claim 1, further comprising:
a pressurizing source (302), wherein the pressurizing source is fluidly coupled to the accumulator (204) and the pressurized cabin (206) and wherein the pressurizing source is configured to supply the pressurized air to both the accumulator and the pressurized cabin.

8. The pneumatic de-icing system of claim 7, further comprising:
an ejector (224), wherein the ejector is fluidly coupled to the pressurizing source and wherein the ejector is configured to utilize a portion of the pressurized air from the pressurizing source to generate a vacuum.

9. An aircraft, comprising:
a pressurized cabin (206); and
the pneumatic de-icing system (200) of any preceding claim.

10. A pneumatic de-icing system, the pneumatic de-icing system comprising:
a de-icing assembly (316, 318);
a pneumatic inlet valve (330), wherein the pneumatic inlet valve is fluidly coupled to the de-icing assembly;
a de-icer flow valve (320, 322), wherein the de-icer flow valve is fluidly coupled to a first port of the pneumatic inlet valve and wherein the de-icer flow valve is configured to supply pressurized air to the pneumatic inlet valve during an icing event;
an ejector (324), wherein the ejector is fluidly coupled to a second port of the pneumatic inlet valve and wherein the ejector is configured to supply a vacuum to the pneumatic inlet valve.

11. The pneumatic de-icing system of claim 10, wherein, responsive to the icing event, the pressurized air from the de-icer flow valve translates a poppet style check valve (408) in the pneumatic inlet valve (330) to an open state blocking the second port and allowing the pressurized air to inflate the de-icing assembly.

12. The pneumatic de-icing system of claim 10 or 11, wherein, responsive to an absences of the icing event and an absence of the pressurized air being supplied from the de-icer flow valve, a poppet style check valve (408) in the pneumatic inlet valve (330) translates to a closed state blocking the first port and allowing the vacuum from the ejector to deflate the de-icing assembly (316, 318).

13. The pneumatic de-icing system of claim 12, wherein a spring in the poppet style check valve (408) closes the pneumatic inlet valve (330) blocking the first port in response to the absence of the pressurized air being supplied from the de-icer flow valve (320, 322).
